# EUROPEAN PATENT APPLICATION

(11) **EP 1 662 717 A1**
(43) Date of publication of application: **31.05.2006**
(21) Application number: 04292804.4
(22) Date of filing: 26.11.2004
(51) Int. Cl.: H04L 12/56

(54) **Improved restoration in a telecommunication network**

(71) Applicant: ALCATEL, 75008 Paris (FR)
(72) Inventor: Canali, Massimo, 20059 Vimercate (Milano) (IT); Mazzini, Andrea Maria, 20060 Pessano con Bornago (Milano) (IT); Volante, Stefano, 20052 Monza (Milano) (IT)
(74) Representative: Menzietti, Domenico

(57) **Abstract**

A method is described for calculating a backup connection for restoring a nominal connection in a telecommunication network. The method performs the calculation of the backup connection taking into account updated values of parameters indicating at least one dynamic feature of a group of segments of the network. The dynamic parameters can be a measure of the performance of the segment, the degree of usage of the segment, the bandwidth overbooking of the segment or the bandwidth fragmentation or a combination of these measures.

## Description

### FIELD OF THE INVENTION

The present invention relates to the telecommunication field and more in particular to restoration of a connection in the telecommunication network. Still more in particular, the invention concerns an improved method for calculating a backup connection.

### BACKGROUND OF THE INVENTION

In a telecommunication network in case of a failure on a segment of a nominal connection carrying user traffic, a backup connection is calculated for protecting the user traffic, which is rerouted from the nominal to the backup connection. The connection is also indicated with "path", nominal is also indicated with working (or intended) connection and backup is also indicated with protection. When the failure on the segment of the nominal connection clears, the traffic is usually reverted from the backup to the nominal connection. The backup connection can be pre-calculated or pre-assigned (and this process is usually defined "protection") or calculated run-time (and it is usually defined "restoration"). In the first case the backup connection is pre-calculated or pre-assigned before the failure occurs (and stored if pre-calculated), while in the second case the backup connection is calculated run-time, that is after the failure occurs. The advantage of protection compared to restoration is usually a smaller recovery time, while the disadvantage is to require more network resources, for example because some segments are assigned in advance and are used only for protection or because available segments are required for having a disjoint backup connection.

The backup connection can be fully disjoint from the nominal connection, that is nominal and backup connections don't have common segments (also indicated with link disjoint), or can be partially disjoint, that is nominal and backup connection have at least one common segment; moreover, the backup connection can be calculated from the source to the destination network element (and it is defined source-based calculation) or can be calculated by the network element detecting the failure (and it is defined link-based calculation), for example routing the connection around the failure. The advantage of source-based calculation is to take into account the entire network topology, that is all the possible routes from source to destination network element; the advantage of link-based calculation is to be faster than the source-based, but it has the disadvantage not to find the optimal route.

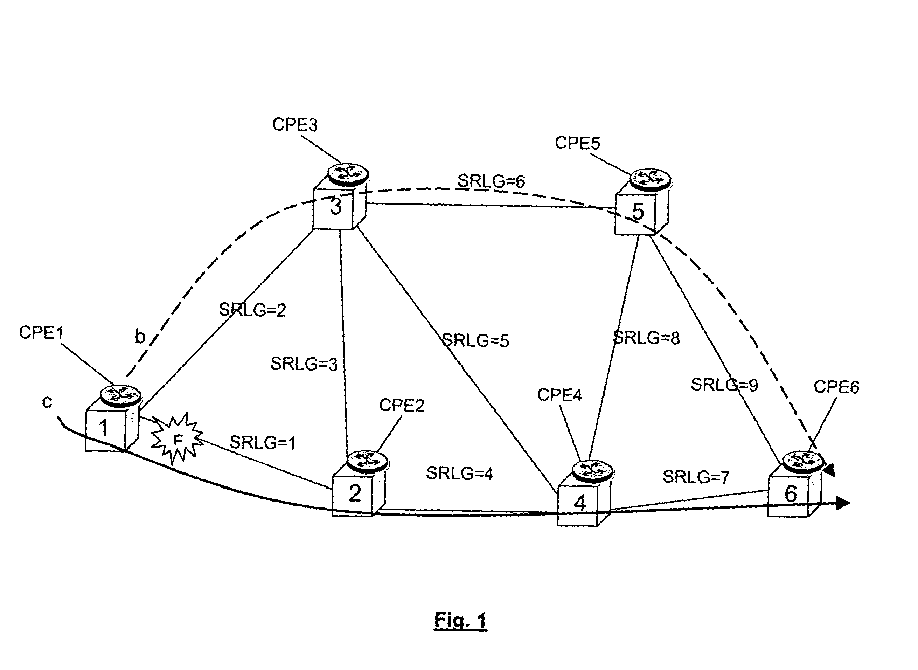

Fig.1 shows a nominal connection (indicated with "c"), crossing network elements 1, 2, 3, 4. When failure F occurs on segment 1-2 of the nominal connection, the user traffic can be rerouted on a fully disjoint backup connection (indicated with "b") crossing network elements 1, 3, 5 and 6, or can be rerouted on a partially disjoint backup connection, crossing network elements 1-3-2-4-6 or 1-3-4-6 or 1-3-5-4-6. Usually one fully disjoint backup connection is pre-calculated, because it can protect the nominal connection after a failure of any segment of the nominal connection, while one (or at least one) partially disjoint backup connection is pre-calculated for each possible failure on a segment.

The concept of backup connection fully disjoint from the nominal connection is implemented by assigning to each segment between two network elements an identifier defined Shared Risk Link Group (SRLG) for indicating the group of segments which share a common risk component, whose failure can potentially cause the failure of all the segments within the group. For example, a conduit can include many optical fibers and in case of failure of the conduit, all the fibers are affected by the failure; in this case, a first SRLG identifier is assigned to the conduit and a different SRLG identifier is assigned to each fiber of the conduit. The purpose of SRLG identifiers is to avoid that the nominal and backup connections share the same risk and consequently to avoid that a failure can affect both the nominal and the backup connections: this is achieved by SRLG diversity between the nominal and backup connection, that is the list of SRLG identifiers of the nominal connection must be different from the list of SRLG identifiers of the backup connection. Referring to Fig.1, the list of SRLG identifiers of the nominal connection is {1, 4, 7}, while the list of SRLG identifiers of the fully disjoint backup connection 1-3-5-6 is {2, 6, 9): the backup connection is SRLG diverse from the nominal connection, meaning that there isn't any SRLG identifier common to the two lists.

The concept of SRLG has been extended to network elements and network domains, assigning SRG (Shared Risk Group) identifiers to network elements and network domains: the same SRG diversity requirement applies, that is nominal and backup connections should not pass through network elements which can both fail together (for example by being located in the same building) or should not pass through network domains that share the same risk. The first case is usually indicated with node disjoint and the second with network domains disjoint.

In traditional networks the calculation of the backup connection can be performed by a centralized network manager controlling each network element; the centralized manager is a software application running on a management station and performing network management functions and it is responsible for configuration of the connections, monitoring alarms and performance of the connections, for protecting the nominal connections calculating a backup connection in case of a fault on a segment of a nominal connection. The centralized manager can be connected directly to the managed network elements or indirectly through channels carrying control data in the same physical network carrying user data or through a different physical network carrying only control data. In the new network architectures, based on the Automatically Switched Optical Network (ASON) defined in International Telecommunication Union (ITU-T) G.8080/Y.1304 (11/2001), the backup connection is calculated by the control plane element (CPE), which controls one or more network elements, also defined Transport Plane Elements (TPE), for protecting the nominal connections starting from the controlled network element (also defined ingress network element). The CPEs are interconnected each other and communicate according to a signalling protocol, in order to provide a fast and efficient configuration of new connections within the Transport Plane, modify the connections previously set up and perform a faster restoration function providing backup connections for protecting the nominal connections. Moreover, the signalling protocol is responsible for notification of the failure from the CPE controlling the network element detecting the failure to the CPE controlling the ingress network element of the connection; for this reason, each intermediate CPE stores the address (for example IP address) of the CPE controlling the ingress network element of the connection.

Various signalling protocols can fit the ASON architecture, like Resource Reservation Protocol (RSVP, defined in RFC2205, RFC2209, RFC2750), Resource Reservation Protocol-Traffic Engineering (RSVP-TE, defined in RFC3209 and ITU-T G.7713.2), Label Distribution Protocol (LDP, defined in RFC3036), Constraint Based-Label Distribution Protocol (CR-LDP, defined in ITU-T G.7713.3, RFC3472), Private Network to Network Interface (PNNI, defined in ITU-T G.7713.1). Referring to RSVP protocol, the base specification was designed to allow network elements (routers) to decide in advance, that is before the provisioning of the connection, if the network can meet the requirements of a Quality of Service (QoS) defined for the connection. The configuration of a new connection is performed transmitting the PATH message and receiving the RESV message in the reverse direction of the PATH message. Restoration is performed in a similar way as configuration of a new connection, using PATH and RESV messages, but in a 'make-before-break' manner, that is the backup connection is setup before the failed nominal connection is torn down. A number of extension were added to support provisioning and maintenance of explicitly routed connections (defined LSP= label switched paths). Finally, RSVP-TE allows the aggregation of connections, defined LPS tunnels, which share a common route and a common pool of shared network resources, reducing the amount of information carryed in the network.

In the ASON architecture each CPE further needs to know properties of network resources (for example, SRG identifiers of the segments) for calculating the backup connections; this information is distributed to the CPEs through routing protocols, like Routing Information Protocol (RIP), Interior Gateway Routing Protocol (IGRP), Open Shortest Path First (OSPF, defined in RFC2328), Open Shortest Path First - Traffic Engineering (OSPF-TE, defined in RFC3639), Intermediate System to Intermediate System (IS-IS, defined in RFC1142), Exterior Gateway Protocol (EGP) and Border Gateway Protocol (BGP, defined in RFC1771).

More in general, SRG identifiers are parameters used for an indication of a static feature of the network, because they are assigned manually by the network operator after deployment of the network or after changing of network topology. In a network controlled by a centralized manager, SRG identifiers are stored into a database (Management Information Base) of the network management station; in a network (ASON) controlled by a distributed manager (CPE), SRG identifiers are distributed by a routing protocol and stored into each CPE.

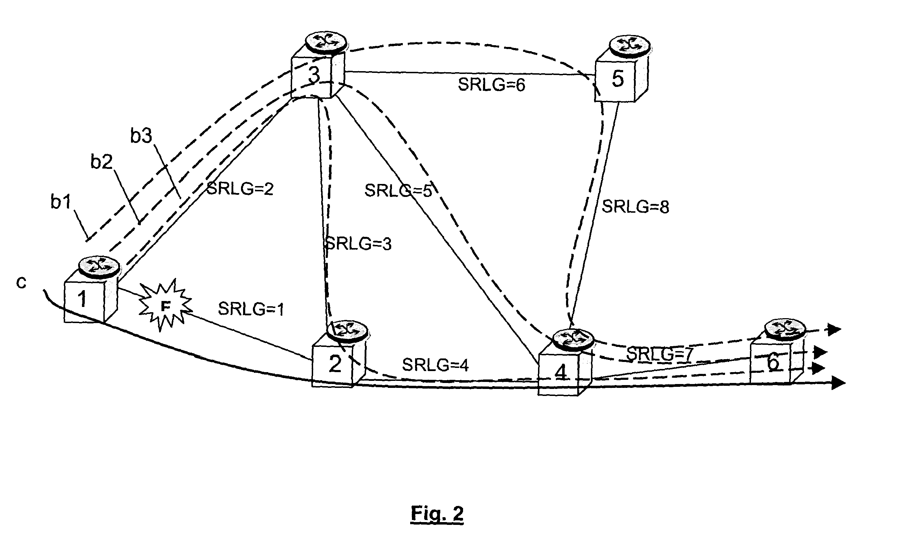

SRG identifiers are taken into account by the routing algorithm, that is the algorithm used for calculating one or more backup connections for protecting a nominal connection, running on the centralized management station or on each CPE. The routing algorithm also receives as inputs the topology of the network (the network elements, the segments and the interconnection) and the list of existing connections; the routing algorithm also receives as inputs some constraints, like the source and destination network elements and SRG diversity. The calculated backup connection can meet all the constraints or can meet only some constraints. For example, the SRG diversity requirement can fail because of lack of network resources: a segment could not have available bandwidth for carrying the backup connection or the network doesn't include the physical resources (fibers) for having a SRG diverse backup connection. Referring to Fig.2 (and compared to Fig.1), no SRLG diverse backup path is possible, because network element 5 is not connected to network element 6 (or network element 5 is connected to network element 6, but no bandwidth is available on the segment). The routing algorithm calculates one or more backup connections not SRG diverse from the nominal connection, for example 1-3-5-4-6 (indicated with "b1"), 1-3-4-6 (indicated with "b2") and 1-3-2-4-6 (indicated with "b3"); some SRG identifiers are common to nominal and backup connections (7 for b1 and b2, 4 and 7 for b3), so that the routing algorithm has to choose which SRG identifiers can be reused. A solution to this problem can be to choose the shortest backup connection, that is the backup connection including less segments, which is usually calculated by a destination-based routing algorithm. According to this solution, connections having the same destination will follow the same route (the shortest one) to the destination (this is known as "fish problem" in IP networks), and the result can be a congestion on this route (high delay to reach the destination or even loss of packets).

### SUMMARY OF THE INVENTION

In view of drawbacks of the known solutions, the main object of the present invention is to provide a method for calculating a backup connection in a telecommunication network. This is performed by a method according to claim 1. The basic idea is take into account updated values of parameters indicating at least one dynamic feature of a group of segments of the network, performing the calculation according to the actual condition of network resources. Advantages of this solution are to reduce the possibility to have a failure on resources involving both the nominal and the backup connections, a better usage of network resources, to reduce the possibility to have network congestion and a better quality of the service carryed over the nominal connection. A correlated object is to provide an improved method for calculating a backup connection not SRG diverse from the nominal connection. This is performed by a method according to claim 4.

### BRIEF DESCRIPTION OF THE DRAWINGS

Fig.1 shows a telecommunication network according to prior art, including a nominal connection (c) and a SRLG diverse backup connection (b).
Fig.2 shows a telecommunication network according to prior art, including a nominal connection (c) and three not SRLG diverse backup connections (b1 , b2 and b3).
Fig.3 shows a telecommunication network according to a first embodiment of the invention, including a nominal connection (c) and a backup connection (b3).
Fig.4 shows a telecommunication network according to a second embodiment of the invention, including a nominal connection (c) and a backup connection (b1).

### BEST MODE FOR CARRYING OUT THE INVENTION

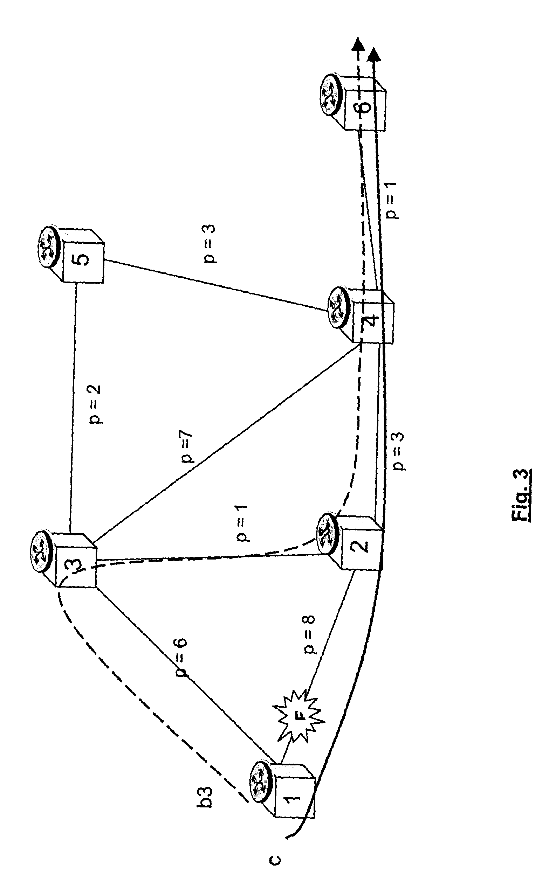

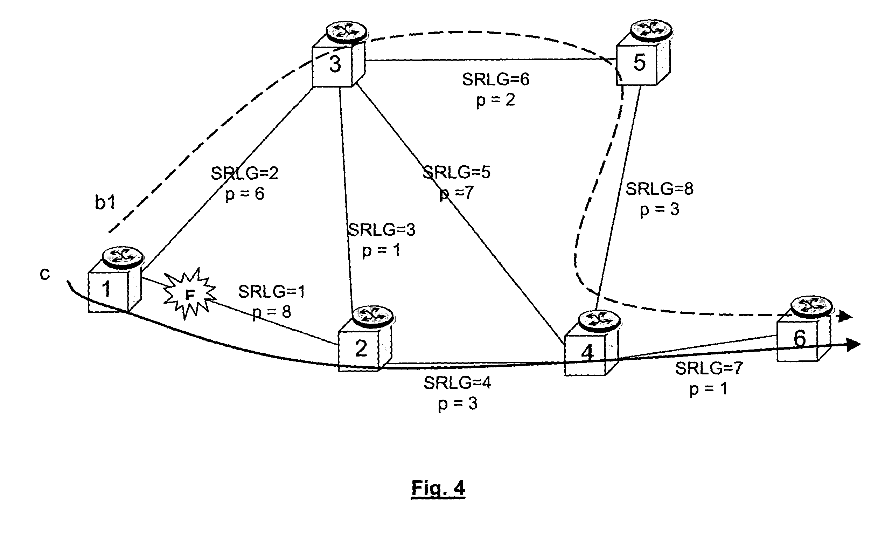

Fig.3 and Fig.4 show, for each segment, a parameter p, which is taken into account by the routing algorithm for calculating the backup connection. More in general, the calculation is performed taking into account the parameters of a group of segments. This group of segments is usually the entire network controlled by the manager performing the calculation or it can be a subset of the segments of the controlled network. Some segments can be excluded from the calculation, for example for avoiding to use a part of the network, or some segments of the nominal connection (not affected by the failure) can be excluded from the calculation, for example for forcing the SRLG diversity for these segments. The group of segments used for the calculation can be predefined or modified dinamically, depending on network evolution.

The dynamic parameters can change continuously and consequently updated values must be provided to the routing algorithm. In case of a network controlled by a central manager, the updated values are retrieved by the central network management station, for example periodically or when the values change; in case of a network controlled by distributed managers, the updated values are distributed by the routing protocol between the CPE, periodically or when the values change.

The parameter p is an indication of at least one dynamic feature of the segment. For example, it can be a measure of:
- the performance of the segment;
- the degree of usage;
- the bandwidth overbooking;
- the bandwidth fragmentation.
A first example of the performance of a segment is the number of errored bits; this measure is usually performed in a defined time unit (for example one second), counting the number of errored bits in the defined time unit. Calculation of the backup connection taking into account the number of errored bits of the segments has the effect to reduce the possibility to have a failure on resources involving both nominal and backup connections. In fact, calculation is performed when a failure is detected on a segment of the nominal connection, but if a segment affected by many errors is used for a backup connection, the received traffic is affected by errors and consequently it is not restored successfully. This possibility is avoided if the number of errors of the segments is taken into account when calculating the backup connection; a segment having a high number of errors is discarded, a segment not affected by errors can be used for the backup connection or the segment having the smallest number of errors is selected between two or more segments affected by errors. A second example of performance of a segment is the degrade, which is detected if the number of errored bits on the segment is greater than a predefined threshold in the defined time unit: a segment affected by degrade is discarded, while a segment not affected by degrade can be used for the backup connection. More in general, performance monitoring measurements can be taken into account for calculation of the backup connection. Referring to SDH (Synchronous Digital Hierarchy), which is a layer 1 of the International Standards Organization / Open System Interconnection (ISO/OSI) stack, performance monitoring can be performed at different sub-layers of the SDH layer: regenerator section (RS), multiplex section (MS), higher-order (HO) path, lower-order path (LO). Errored bits (or bytes) are detected comparing bit interleaved parity (BIP) calculated at the receiver and the received BIP value; the received BIP value is byte B1 for regenerator section, B2 for multiplex section, B3 for HO path, V5 for LO path. Moreover, a complex telecommunication network includes not only layer 1 of the ISO/OSI stack, like SDH and OTN (Optical Transport Network), but also upper layers, like ATM (Asynchronous Transfer Mode) for layer 2, IP (Internet Protocol) for layer 3, and can include also sub-layers inside a layer (like RS, MS, HO and LO for SDH). Performance can be measured at the different layers and sub-layers and any combination of the measured performance can be used for calculation of the backup connection.

The degree of usage can be defined as the available bandwidth on the segment or the number of connections carryed over the segment. A segment having a low degree of usage can be used for the backup connection or the segment having the smallest degree of usage is selected between two or more segments. Degree of usage is very important in traffic engineered network, wherein the purpose is to balance the traffic load on the various segments of the connections and on the various network elements, so that none of these segments and network elements are over-utilized or under-utilized. The advantage is to fully exploit network infrastructure (for example, increasing the number of nominal connections carryed in the network) and also to avoid traffic congestion.

The bandwidth overbooking enables the user to virtually allocate more bandwidth than allowed by the physical line, thus providing better bandwidth exploitation and an increased number of connections. This is possible if connections have a variable bit rate, because there is a low probability that all connections transmit data at the maximum bit rate simultaneously. Referring to ATM, overbooking is used for UBR (Unspecified Bit Rate) and VBR (Variable Bit Rate) services, while it is not usually used for CBR (Constant Bit Rate) services. The effect of virtually increasing the bandwidth can be obtained by two different approaches, defining an overbooking parameter. In the first one, the physical bandwidth of a segment is multiplied for the overbooking parameter, so that it seems to have an increased available bandwidth for the segment; in the second approach, bandwidth of each connection on the segment is divided by the overbooking parameter, thus allocating less bandwidth for each connection. The overbooking parameter can be taken into account for calculating the backup connection: the higher is the value of the overbooking parameter of the segment, the higher is the probability to have a degrade of the quality of the service carryed by the nominal connection, because less bandwidth is available for each connection on the segment. A segment having a high value of the overbooking parameter is discarded, a segment without overbooking can be used for the backup connection and the segment having the smallest value of the overbooking parameter is selected between two or more segments.

Bandwidth fragmentation occurs when the available bandwidth of a segment is not assigned continuously for carrying the connections. This can happen when connections are set up and then released and the correspondent bandwidth becomes available. This is a disadvantage because a new connection can't be established because no continuous bandwidth required for the connection is available on a segment, although the overall required bandwidth is available on the segment. Bandwidth fragmentation can be measured and the measured value can be advantageously taken into account when calculating the backup connection. In fact a segment having a low fragmentation value should be preferred to a segment having an high fragmentation value, because although in the second case the backup connection can be established successfully, there is a high probability that a subsequent connection using the same segment can't be established for lacking of bandwidth.

The parameter p can indicate one of the above dynamic features or it can be a combination of two (or more) dynamic features; for example, the calculated backup connection can be optimized only for the performance or can be optimized for both the performance and the degree of usage. Alternatevely, a list can be defined, including different types of dynamic parameters and one of the list is selected, according to different rules:
■ a different priority can be defined for each type of dynamic parameter and the calculation is performed taking into account the dynamic parameter having the highest priority and, in case the calculation fails, taking into account the subsequent dynamic parameter of the list;
■ one type of dynamic parameter is selected from the list according to the quality of service required for the nominal connection. In case of a nominal connection requiring a guaranteed minimum bit rate, the selected dynamic parameter is the bandwidth, in order to calculate a backup connection taking into account the bandwidth of the segments for having the minimum required bit rate. In case of a nominal connection requiring a maximum number of errors in a time unit, the selected dynamic parameter is the degrade of the segments.

Referring to Fig.3 and Fig.4, the meaning of the value of parameter p (which can be an indication of one dynamic feature or a combination of more than one dynamic feature, as explained above) is that the highest is the value, the worst is the quality of the segment.

Fig.3 shows a first embodiment of the invention, wherein the routing algorithm calculates the backup connection taking into account the dynamic parameters of the segments shown in Fig.3. According to this solution, the calculated backup connection is b3, crossing network elements 1-3-2-4-6. In fact, the possible routes from network element 1 to 6 are 1-3-5-4-6 (b1 in Fig.1), 1-3-4-6 (b2 in Fig.1) and 1-3-2-4-6 (b3 in Fig.1); the sum of parameters p for these routes are 12, 14 and 11 respectively, so that the smallest value will be choosen, correspondent to b3. Contrary to known solutions, the calculated backup connection isn't the shortest available backup connection. More in general, calculation of the backup connection is performed using a group of segments of the network and includes the following steps:
a) using the group of segments, identifying at least two routes (b1, b2 and b3 in Fig1) in the network for protecting the nominal connection;
b) evaluating the dynamic parameters for each of the at least two routes (12, 14 and 11 respectively);
c) comparing each other the evaluated dynamic parameters of the at least two routes (11 is the smallest value);
d) selecting one of the at least two routes for the backup connection depending on the comparison result (selecting b3, correspondent to 11).

Fig.4 shows a second embodiment of the invention, wherein the routing algorithm calculates the backup connection taking into account both the dynamic parameters and static parameters of the segments, for example the SRLG identifiers. More in particular, the calculation takes into account first only the static parameters and then only the dynamic parameters. According to this solution, the calculated backup connection is b1, crossing network elements 1-3-5-4-6. In fact the routing algorithm calculates three backup connections, b1, b2 and b3 of Fig.2, taking into account the SRLG identifiers; b3 is discarded, because it has two SRLG identifiers (SRLG=4 and SRLG=7) common to the nominal connection c, while b1 and b2 both have one SRLG identifier (SRLG=7) common to the nominal connection. At this step the algorithm has to select one of the two connections and it needs to know further information for performing the selection, because b1 and b2 are equivalent if considering the SRLG diversity requirement. The algorithm performs the selection taking into account the dynamic parameters (p) of the two backup connections. Again, a simple solution is to perform the sum of parameters p of b1 and b2 and choose the backup connection having the smallest value of the sum. For b1 the sum of the parameters p is 6+2+3+1=12 and for b2 the sum is 6+7+1=14: in this case, the algorithm selects b1. Again, contrary to known solutions, the selected connection b1 is longer than the discarded connection b2, that is b1 includes more segments than b2. More in general, calculation of the backup connection is performed using a group of segments of the network and includes the following steps:
a) using the group of segments, identifying at least three routes (b1, b2 and b3 in Fig.1) in the network for protecting the nominal connection;
b) evaluating the static parameters (SRLG identifiers) for each of the at least three routes (SRLG= {2,6,8,7 } for b1, SRLG= {2,5,7 } for b2, SRLG= {2,3,4,7 } for b3) and for the nominal connection ( SRLG= { 1,4,7} for c);
c) comparing the evaluated static parameters of each of the at least three routes respect to the nominal connection (SRLG={7} common between b1 and c, SRLG={ 7 } common between b2 and c, SRLG={ 4,7 } common between b3 and c);
d) selecting at least two (b1 and b2) of the at least three routes depending on the comparison result;
e) evaluating the dynamic parameters for each of the at least two routes (12 for b1, 14 for b2);
f) comparing each other the evaluated dynamic parameters of the at least two routes (12 is smaller than 14);
g) selecting one of the at least two routes for the backup connection depending on the comparison result (selecting b1, correspondent to 12).

A third embodiment, not shown in the Figures, is reverse to the second embodiment, that is the calculation takes into account first only the dynamic parameters and then only the static parameters. In general, calculation of the backup connection is performed using a group of segments of the network and includes the following steps:
a) using the group of segments, identifying at least three routes in the network for protecting the nominal connection;
b) evaluating the dynamic parameters for each of the at least three routes;
c) comparing each other the evaluated dynamic parameters of the at least three routes;
d) selecting at least two of the at least three routes depending on the comparison result;
e) evaluating the static parameters for each of the at least two routes and for the nominal connection;
f) comparing the evaluated static parameters of each of the at least two routes respect to the nominal connection;
g) selecting one of the at least two routes for the backup connection depending on the comparison result.

According to the known solutions, calculation is performed taking into account parameters indicating a static feature of the segments. The most used static feature is the SRG identifier, but alternatevely new types of static features can be taken into account. For example it can be:
- a network protection scheme;
- the physical medium of the segment;
- the segment length.
Network protection schemes defined for a segment or between two network elements including several segments can also be taken into account; referring to SDH/SONET (Synchronous Optical NETwork), an example is linear MSP (Multiplex Section Protection) provided for a segment or MS-SPRING (Multiplex Section Shared Protection Ring) provided for a ring of network elements.

The physical medium can be a fiber optic, a copper cable or a radio link. A fiber segment must be preferred to a copper cable, because the bit error rate is lower. For the same reason, a copper cable must be preferred to a radio link, because in a radio link the signal can be received by multiple paths and this can cause an attenuation of the signal.

The segment length can also be taken into account for calculation of the backup connection: a segment having a low delay must be preferred to a segment having a high delay. This is more important for connections carrying services requiring a low delay from the source to the destination network element, such as real-time services.

In a fourth embodiment, the calculation is performed taking into account at least one of the new types of static features indicated above.

In a fifth embodiment, the calculation is performed taking into account both at least one of the new types of static features and at least one of the dynamic parameters.

In a sixth embodiment, the calculation is performed taking into account both the SRG identifiers and at least one of the new types of static features and at least one of the dynamic parameters.

In a seventh embodiment, the calculation is performed taking into account both the SRG identifiers and at least one of the new types of static features. For example, the routing algorithm can calculate the backup connections taking into account the SRG identifiers and also the protection scheme or the physical medium or the segment length. For example, it can first calculate at least two equivalent backup connections taking into account only the SRG identifiers and than it can select one of them taking into account a protection scheme or the physical medium or the segment length (or any combination of the protection scheme, of the physical medium and of the segment length). Viceversa, the routing algorithm can first calculate at least two equivalent backup connections taking into account only a protection scheme or the physical medium or the segment length (or any combination of the protection scheme, of the physical medium and of the segment length) and then it can select one of them taking into account the SRG identifiers.

After calculation of a first backup connection according to the inventive method and after routing of user traffic from the nominal to the first backup connection, in case one (or more) value of the dynamic parameter of the segments of the first backup connection change, a second backup connection can be calculated, iterating the inventive method, and the user traffic is routed from the first to the second backup connection. For example, a range of values can be defined for parameters p, and the calculation of the second backup connection is performed if one of the values of the dynamic parameters of the segments of the first backup connection change out of the defined range. Alternatevely, the routing algorithm can continuously calculate backup connections, compare them to the first backup connection and select a second backup connection if better than the first backup connection.

The inventive method can be performed through a software program running on a central management station or running on a CPE of an ASON network. In the first case each network element detecting a failure transmits an indication of the failure to the network management station. In the second case each network element detecting a failure transmits an indication to the CPE controlling the network element; this CPE transmits through the signalling protocol a message to other CPEs for indication of the failure. This message must reach all the CPEs controlling the ingress network element of the nominal connections affected by the failure. The software includes at least one module for:
- receiving a list of network elements of the nominal connection ;
- receiving for a group of segments of the network updated values of the dynamic parameters (for example performance, degree of usage, bandwidth overbooking, bandwidth fragmentation) of the group of segments;
- receiving a first message for indication of a failure on at least one segment of the nominal connection;
- after receiving the indication of the failure, calculating the backup connection for protecting the nominal connection, the calculation taking into account the updated values of the dynamic parameters.
The calculation includes the steps described in the first embodiment.

The software program can calculate the backup connection taking into account both dynamic parameters and static parameters; in this case the calculation includes the steps described in the second or third embodiment.

The program can be performed on hardware means of a CPE of an ASON network. The CPE includes:
- hardware means, for example a management information base, for storing the list of network elements of the nominal connection and dynamic parameters of the group of segments;
- hardware means, for example a microprocessor, for receiving the stored parameters, receiving a first message indicating a failure on at least one segment of the nominal connection and calculating the backup connection taking into account the dynamic parameters.
The hardware means can further store the static parameters of the group of segments.

An inventive routing protocol interconnecting the CPEs carries the updated values of the dynamic parameters (for example performance, degree of usage, bandwidth overbooking, bandwidth fragmentation) of the group of segments; messages are transmitted periodically or when the values of the dynamic parameters change. The routing protocol carries also the static parameters; in this case messages are transmitted after deployment of the network or when the topology changes.

## Claims

1. Method for calculating a backup connection (b1, b2, b3) in a telecommunication network including network elements (1, 2, 3, 4, 5, 6) connected through connection segments (1-2, 1-3, 2-3, 2-4, 3-4, 3-5, 4-5, 4-6), the backup connection protecting a nominal connection when a failure (F) occurs on at least one segment (1-2) of the nominal connection, **characterized in that** the calculation of the backup connection takes into account updated values of first parameters (p), the first parameters indicating at least one dynamic feature of a group of segments of the network.

2. Method according to claim 1, **characterized in that** the first parameters are an indication of at least one of the following measures:
■ performance;
■ degree of usage;
■ bandwidth overbooking;
■ bandwidth fragmentation.

3. Method according to claim 1, **characterized in that** the calculation includes the following steps:
a) using the group of segments, identifying at least two routes (b1, b2, b3) in the network for protecting the nominal connection;
b) evaluating the first parameters for each of the at least two routes;
c) comparing each other the evaluated first parameters of the at least two routes;
d) selecting one (b3) of the at least two routes for the backup connection depending on the comparison result.

4. Method according to claim 1, **characterized in that** the calculation of the backup connection takes into account the first parameters and second parameters (SRG), the second parameters indicating at least one static feature of the group of segments.

5. Method according to claim 4, **characterized in that** the calculation includes the following steps:
a) using the group of segments, identifying at least three routes (b1, b2, b3) in the network for protecting the nominal connection;
b) evaluating the second parameters for each of the at least three routes and for the nominal connection;
c) comparing the evaluated second parameters of each of the at least three routes respect to the nominal connection;
d) selecting at least two (b1, b2) of the at least three routes depending on the comparison result;
e) evaluating the first parameters for each of the at least two routes;
f) comparing each other the evaluated first parameters of the at least two routes;
g) selecting one (b1) of the at least two routes for the backup connection depending on the comparison result.

6. Method according to claim 4, **characterized in that** the calculation includes the following steps:
a) using the group of segments, identifying at least three routes in the network for protecting the nominal connection;
b) evaluating the first parameters for each of the at least three routes;
c) comparing each other the evaluated first parameters of the at least three routes;
d) selecting at least two of the at least three routes depending on the comparison result;
e) evaluating the second parameters for each of the at least two routes and for the nominal connection;
f) comparing the evaluated second parameters of each of the at least two routes respect to the nominal connection;
g) selecting one of the at least two routes for the backup connection depending on the comparison result.

7. Method according to claim 1, **characterized by** iterating the calculation in case at least one value of the first parameters of the segments of the backup connection changes.

8. Method according to claim 2, **characterized by** defining a list including at least two different types of the first parameters and selecting one parameter from the list according to a rule.

9. Method according to claim 4, **characterized in that** the second parameters are an indication of at least one of the following static features of the group of segments:
■ protection scheme;
■ physical medium;
■ length.

10. Software program to control a telecommunication network, the network including network elements (1, 2, 3, 4, 5, 6) connected through connection segments (1-2, 1-3, 2-3, 2-4, 3-4, 3-5, 4-5, 4-6), the program comprising at least one module for:
- receiving a list of network elements of a nominal connection (c);
- receiving for a group of segments of the network updated values of first parameters (p), the first parameters indicating at least one dynamic feature of the group of segments;
- receiving a first message for indication of a failure (F) on at least one segment (1-2) of the nominal connection;
- after receiving the indication of the failure, calculating a backup connection (b1, b2, b3) for protecting the nominal connection, the calculation taking into account the updated values of the first parameters.

11. Control plane element including hardware means adapted to run the program according to claim 10, the hardware means including:
- storing means adapted to store the list and the first parameters;
- processing means adapted to receive from the storing means the list and the first parameters, receive from an adiacent control plane element the first message and calculate the backup connection.

12. Routing protocol interconnecting control plane elements (CPE1, CPE2, CPE3, CPE4, CPE5, CPE6) of a telecommunication network including network elements (1, 2, 3, 4, 5, 6) connected through connection segments (1-2, 1-3, 2-3, 2-4, 3-4, 3-5, 4-5, 4-6), the protocol carrying updated values of first parameters (p), the first parameters indicating at least one dynamic feature of a group of segments of the network.
